**Europäisches Patentamt**

(19) **European Patent Office**

**Office européen des brevets**

(11) Veröffentlichungsnummer: **0 120 381 B1**

(12) **EUROPÄISCHE PATENTSCHRIFT**

(45) Veröffentlichungstag der Patentschrift:
17.09.86

(51) Int. Cl.⁴: **G 01 N 21/73**

(21) Anmeldenummer: **84102608.1**

(22) Anmeldetag: **09.03.84**

(54) Plasmabrenner für die ICP-Emissionsspektrometrie.

(30) Priorität: **24.03.83 DE 3310742**

(43) Veröffentlichungstag der Anmeldung:
**03.10.84 Patentblatt 84/40**

(45) Bekanntmachung des Hinweises auf die Patenterteilung:
**17.09.86 Patentblatt 86/38**

(84) Benannte Vertragsstaaten:
**AT BE CH DE FR GB IT LI NL**

(56) Entgegenhaltungen:
**APPLIED SPECTROSCOPY, Band 36, Nr. 6, November/Dezember 1982, Seiten 627-631, Baltimore, Maryland, USA; R. REZAAIYAAN et al.: "Design and construction of a low-flow, low-power torch for inductively coupled plasma spectrometry"**
**ANALYTICAL CHEMISTRY, Band 51, Nr. 3, März 1979, Seiten 408-413; R.N. SAVAGE et al.: "Development and characterization of a miniature inductively coupled plasma source for atomic emission spectrometry"**
**APPLIED SPECTROSCOPY, Band 31, Nr. 5, September/Oktober 1977, Seiten 434-443; C.D. ALLEMAND et al.: "A study of inductively coupled plasma torch configurations"**

(73) Patentinhaber: **Siemens Aktiengesellschaft Berlin und München, Wittelsbacherplatz 2, D-8000 München 2 (DE)**

(72) Erfinder: **Falk, Gertrud, Dr., Dechsendorfer Strasse 10, D-8551 Röttenbach (DE)**

## Beschreibung

Die Erfindung betrifft eine Anregungsquelle für die ICP-Emissionsspektralanalyse mit Zuleitungen für ein Plasmagas, ein Kühlgas und ein Probenträgergas sowie einem inneren Kühlgasrohr und einem dazu konzentrischen äusseren Kühlgasrohr und einer im Zentrum geführten Kapillare mit einer Induktionsspule zum Erzeugen eines Plasmas.

Für die ICP-Emissionsspektrometrie die zum Nachweis von Elementen wie Bor, Eisen, Magnesium Phosphor und Zink eingesetzt wird, sind verschiedene Brenner bekannt.

Der bekannte Standardbrenner gemäss S. Greenfield at al. Analyst 89, 716 - 720 (1964) arbeitet mit Stickstoff als Kühlgas und Argon als Plasma. Das Plasma wird im Innern des Brenners durch eine Induktionsspule mit 2 bis 3 Windungen, die den Brenner eng umschliesst, erzeugt. Eine an der Spule angelegte Hochspannungsspannung baut im Brenner ein sich änderndes Magnetfeld auf, welches wiederum eine elektrische Ringspannung senkrecht zur Brennerachse hervorruft. Diese Ringspannung liegt in der Grössenordnung von 20 bis 30 V und hält nach erfolgter Zündung das Plasma, welches die Form eines Ellipsoides besitzt, aufrecht.

Es werden für den Betrieb des Plasmas drei Gasströme benötigt: Plasmagas, Kühlgas und Probenträgergas (Aerosolgas). Plasma- und Kühlgas bewirken in Gegenstromrichtung eine starke Abflachung des Plasmaellipsoids und in Strömungsrichtung eine Verlängerung desselben. Dadurch wird es möglich, mit dem Aerosolgasstrom das Plasma in der Mitte zu durchstrossen, so dass es eine ringförmige Gestalt annimmt. Nur in diesem Fall wird das Aerosolgas genügend aufgeheizt, was bewirkt, dass die in der Probe enthaltenen Elemente entsprechend hoch angeregt werden. Die durch die Anregung entstehende Lichtemission kann dann sowohl qualitativ als auch quantitativ mit Hilfe eines Spektrophotometers analysiert werden.

Wird das Plasmaellipsoid vom Aerosolgas nicht durchstossen, so wirkt es auf die Probengasströmung wie ein fester Körper und der grösste Teil des Aerosols wird unaufgeheizt am Plasma vorbeiströmen.

Die Druckverteilung im Plasma und damit auch die magnetisch induzierte Rückströmung werden durch Plasma- und Kühlgasströmung beeinflusst. Haben Plasma- und Kühlgasströmung zusätzlich eine Tangentialkomponente, so wird die Rückströmungsgeschwindigkeit verringert, was die Einführung des Aerosolgases erleichtert. Die Kühlgasströmung hat jedoch in erster Linie die Aufgabe, die Quarzwand zu kühlen, die mit dem Plasma in Kontakt ist.

Argon/Stickstoff-Brenner benötigen ca. 5 bis 10 l Ar/min und 15 bis 20 l $N_2$/min. Der Gesamtgasverbrauch ist also beachtlich. Er ist 2- bis 5mal so gross wie die Plasmagasströmung.

Zur Reduktion des Gasverbrauchs, insbesondere des Verbrauchs an teurem Argongas, wurden die Brennerabmessungen verkleinert. Durch Verkleinerung der Brennerabmessungen wird jedoch die Stabilität des Plasmas beeinträchtigt und die Nachweisempfindlichkeit des Verfahrens verschlechtert, siehe A.D. Weiss et al. Analytica Chimica Acta, 124 (1981) 245 bis 258. Ausserdem können mit solchen Brennern keine so hohen Leistungen erreicht werden, wie mit einem Standardbrenner. Auch muss wegen der verkleinerten Gasdurchflüsse die ins Plasma eingeführte Aerosolgasmenge aus Stabilitätsgründen reduziert werden, wodurch ebenfalls die Nachweisempfindlichkeit sinkt.

Aus Analytical Chemistry, Vol. 51, Nr. 14, Dezember 1979, Guy R. Kornblum «Reduction of Argon Consumption by a Water Cooled Torch in Inductively Coupled Plasma Emission Spectrometry», Seiten 2378 bis 2381 und Anal. Chem. 1980, 52, H. Kawaguchi «Water-Cooled Torch for Inductively Coupled Plasma Emission Spectrometry», Seiten 2440 bis 2442 sind Brennertypen mit Wasserkühlung bekannt. Die Kühlung der äusseren Wand des Brenners wird mit Wasser vorgenommen. Hierdurch kann der Gasverbrauch wesentlich gesenkt werden. Die Kühlgasströmung kann jedoch nicht ganz entfallen, da sonst die Strömungs- und Druckverhältnisse im Plasma ungünstig verändert werden.

Aufgabe der Erfindung ist es, die hohen Betriebskosten der ICP-Emissionsspektrometrie bedingt durch den hohen Gasverbrauch zu senken. Der zu entwickelnde Brennertyp sollte die genannten Nachteile nicht zeigen. Er sollte bei geringem Gasverbrauch ohne Einbusse an analytischer Leistungsfähigkeit betrieben werden können.

Diese Aufgabe wird — ausgehend von der eingangs geschilderten Anregungsquelle — erfindungsgemäss mit einem zusätzlichen konzentrischen Rohr gelöst, das derart zwischen dem inneren Kühlgasrohr und dem Kapillarrohr angeordnet ist, dass sich im Betrieb ein ringförmiger Plasmagasstrom zwischen dem inneren Kühlgasrohr 7 und dem zusätzlichen Rohr 10 bildet. Dabei hat es sich als besonders günstig erwiesen, wenn der Abstand des Rohres 10 zum inneren Kühlgasrohr 7 kleiner ist als der Abstand zur Kapillare 9.

Die Zentrierung des Rohres 10 kann mittels eines Ringes 11 erfolgen. Der Zentrierring besteht vorzugsweise aus Aluminiumoxid.

Das Rohr 10 besteht aus einem nichtleitenden hitzebeständigen Material, vorzugsweise aus Quarz oder Bornitrid. Als Plasmagas sind Edelgase, wie z.B. Argon, geeignet. Als Probenträgergas zur Erzeugung des Aerosols dient Argon.

Durch das erfindungsgemässe Einfügen eines zusätzlichen Quarzrohres ins innere Brennerrohr strömt das Plasmagas durch einen schmalen Ringspalt, was das Einbringen von Aerosol erleichtert. Es bildet sich ein ringförmiger Gasfluss im Gegensatz zu einem Gasstrom über den gesamten Rohrquerschnitt bei den bekannten Brennern.

Durch diese veränderten Strömungsbedingungen ist der Widerstand gegen die Aerosolgasströmung in der Mitte des Plasmas offensichtlich geringer, so dass noch bei einem Plasmagasdurchfluss von 2 bis 3 l/min an Argon eine Aerosolmenge von 0,6 bis 0,7 l/min eingebracht werden kann. Das Plasma brennt dabei genauso ruhig wie beim herkömmlichen Brenner, der jedoch dabei 7 bis 8 l/min Argon benötigt. Die erzielte Argoneinsparung beträgt somit 60 bis 70%.

Ausserdem ermöglicht die erfindungsgemässe Vorrichtung bei den herrschenden Betriebsbedingungen die zur Kühlung verwendete Stickstoffmenge zu verringern. Von 20 l/min Stickstoffverbrauch beim herkömmlichen Brenner kann bis auf ca. 11 l/min an Kühlgas bei der Vorrichtung gemäss der Erfindung reduziert werden. Dies bedeutet fast 50% Einsparung an Stickstoff.

Da die analytische Empfindlichkeit der erfindungsgemässen Vorrichtung bei reduziertem Gasverbrauch hoch ist und die Einsatzpalette hinsichtlich der zu bestimmenden Elemente breit, ist die Vorrichtung insbesondere für Routineanalysen sehr geeignet.

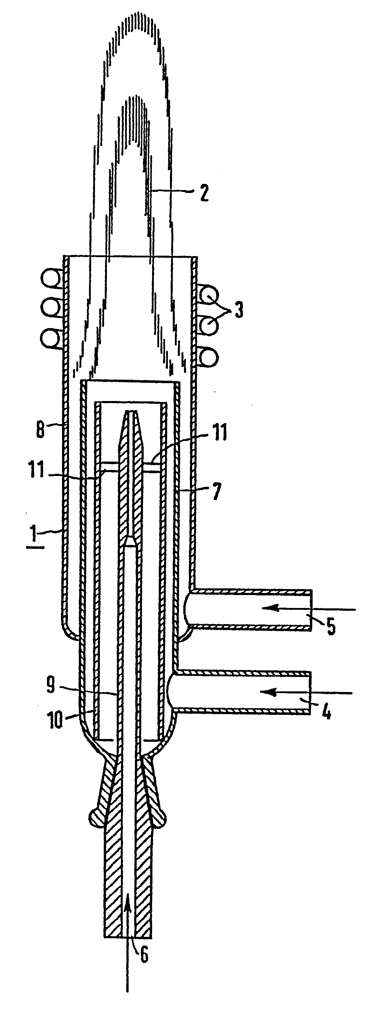

Die Figur zeigt schematisch einen Plasmabrenner 1. Die wesentlichsten Teile sind ein inneres Kühlgasrohr 7, ein äusseres Kühlgasrohr 8 und eine Kapillare 9. In diese wird das Probenträgergas 6 eingeleitet. Zwischen der Kapillare 9 und dem inneren Kühlgasrohr 7 ist erfindungsgemäss das konzentrische Rohr 10 aus Quarz. Dieses kann durch einen Zentrierring 11 gehalten werden. Am äusseren Kühlgasrohr 8 ist die Zuleitung 5 für das Kühlgas und am inneren Kühlgasrohr 7 die Zuleitung 4 für das Plasmagas. Im oberen Teil ist die Induktionsspule 3. Mit 2 ist das Plasma bezeichnet.

**Patentansprüche**

1. Anregungsquelle für die ICP-Emissionsspektralanalyse mit Zuleitungen (4, 5, 6) für ein Plasmagas, ein Kühlgas und ein Probenträgergas, einem inneren Kühlgasrohr (7), einem dazu konzentrischen äusseren Kühlgasrohr (8) und einer im Zentrum geführten Kapillare (9) mit einer Induktionsspule (3) zum Erzeugen eines Plasmas (2), dadurch gekennzeichnet, dass ein zusätzliches konzentrisches Rohr (10) derart zwischen dem inneren Kühlgasrohr (7) und der Kapillare (9) angeordnet ist, dass sich im Betrieb ein ringförmiger Plasmagasstrom zwischen dem inneren Kühlgasrohr (7) und dem zusätzlichen Rohr (10) bildet.

2. Anregungsquelle für die Emissionsspektralanalyse nach Anspruch 1, dadurch gekennzeichnet, dass der Abstand des zusätzlichen Rohres (10) zum inneren Kühlgasrohr (7) kleiner ist als der Abstand zur Kapillare (9).

3. Anregungsquelle für die Emissionsspektralanalyse nach Anspruch 1 und 2, dadurch gekennzeichnet, dass das zusätzliche Rohr (10) mittels eines Zentrierringes (11) justiert ist.

4. Anregungsquelle für die Emissionsspektralanalyse nach Anspruch 3, dadurch gekennzeichnet, dass der Zentrierring (11) aus Aluminiumoxid besteht.

**Claims**

1. An excitation source for ICP-emission spectral analysis comprising feed lines (4, 5, 6) for a plasma gas, a cooling gas and a sample carrier gas, an inner cooling gas pipe (7), an outer cooling gas pipe (8) concentric therewith, and a capillary tube (9) which is led through the centre and has an induction coil (3) for producing a plasma (2), characterised in that an additional concentric pipe (10) is arranged between the inner cooling gas pipe (7) and the capillary tube in such a way that, during operation, an annular plasma gas flow is formed between the inner cooling gas pipe (7) and the additional pipe (10).

2. An excitation source for emission spectral analysis as claimed in Claim 1, characterised in that the distance from the additional pipe (10) to the inner cooling gas pipe (7) is less than the distance to the capillary tube (9).

3. An excitation source for emission spectral analysis as claimed in Claim 1 and 2, characterised in that the additional pipe (10) is adjusted by means of a centering ring (11).

4. An excitation source for emission spectral analysis as claimed in Claim 3, characterised in that the centering ring (11) is made of aluminium oxide.

**Revendications**

1. Source d'excitation pour l'analyse spectroscopique d'émission par plasma induit par haute fréquence, comprenant des conduits d'amenée (4, 5, 6) d'un gaz plasmagène, d'un gaz réfrigérant et d'un gaz porteur d'échantillons, un tube intérieur (7) pour le gaz réfrigérant, un tube extérieur (8) concentrique à celui-ci pour le gaz réfrigérant, et un tube capillaire (9) guidé au centre et ayant une bobine d'induction (3) pour l'obtention d'un plasma (2), caractérisée en ce qu'un tube (10) concentrique supplémentaire est disposé entre le tube (7) intérieur pour le gaz réfrigérant et le tube capillaire (9), de manière à ce qu'il se forme, en fonctionnement, un courant annulaire de gaz plasmagène entre le tube intérieur (7) pour le gaz réfrigérant et le tube (10) supplémentaire.

2. Source d'excitation pour l'analyse spectroscopique d'émission suivant la rivendication 1, caractérisée en ce que la distance entre le tube (10) supplémentaire et le tube intérieur (7) pour le gaz réfrigérant est inférieure à la distance entre le tube supplémentaire (10) et le tube capillaire (9).

3. Source d'excitation pour l'analyse spectroscopique d'émission suivant la rivendication 1 ou 2, caractérisée en ce que le tube (10) supplémentaire est ajusté au moyen d'une bague de centrage (11).

4. Source d'excitation pour l'analyse spectroscopique d'émission suivant la rivendication 3, caractérisée en ce que la bague de centrage (11) est en oxyde d'aluminium.